# EUROPEAN PATENT APPLICATION

(11) **EP 4 404 370 A1**
(43) Date of publication of application: **24.07.2024**
(21) Application number: 23875100.2
(22) Date of filing: 14.09.2023
(51) Int. Cl.: H01M 50/591, H01M 50/588, H01M 50/507, H01M 50/503, H01M 50/522, H01M 50/204

(54) **BUSBAR ASSEMBLY CAPABLE OF PREVENTING DAMAGE DUE TO OCCURRENCE OF FIRE AND BATTERY PACK COMPRISING SAME**

(30) Priority: 04.10.2022 KR 20220125944
(71) Applicant: LG Energy Solution, Ltd., Seoul 07335 (KR)
(72) Inventor: YUN, Sun Woo, Daejeon 34122 (KR)
(74) Representative: Goddar, Heinz J.
(86) International application number: PCT/KR2023/013785
(87) International publication number: WO 2024/076032

(57) **Abstract**

The present invention relates to a busbar assembly capable of preventing damage by fire and a battery pack including the same, and more particularly to a busbar assembly including a busbar made of a copper material and a cover member wrapping a part of the busbar, wherein the busbar includes a first busbar and a second busbar, the first busbar protruding from each of opposite sides of the cover member and the second busbar wrapped by the cover member, and the width of the second busbar is less than the width of the first busbar.

## Description

### [Technical Field]

This application claims the benefit of priority to Korean Patent Application No. 2022-0125944 filed on October 4, 2022, the disclosure of which is incorporated herein by reference in its entirety.

The present invention relates to a busbar assembly capable of preventing damage by fire and a battery pack including the same, and more particularly to a busbar assembly capable of preventing fire in a battery cell received in one of a plurality of battery modules from spreading to a battery module adjacent thereto in a direction toward a busbar assembly, thereby preventing damage by fire, and a battery pack including the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, fire may break out in a battery cell received in a battery module due to external impact, short circuit, overcurrent, etc., and such fire may cause secondary damage along a busbar that connects adjacent battery modules to each other.

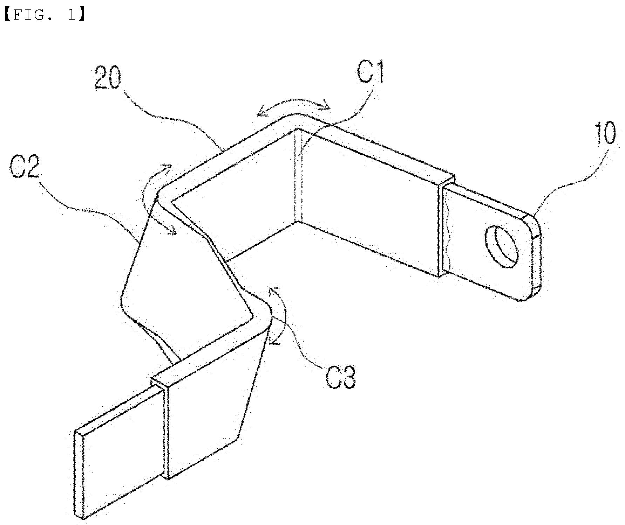

FIG. 1 is a perspective view showing a conventional flexible busbar assembly. As shown in FIG. 1, the conventional flexible busbar assembly includes a busbar 10 configured to electrically connect adjacent battery modules to each other and a cover member 20 configured to wrap the busbar 10.

A specific part of the conventional flexible busbar assembly may be deformed into a desired shape, for example, by bending in order to easily electrically connect battery modules provided on a complex path to each other.

When fire breaks out in a battery cell in the battery module, however, the cover member 20 may melt and the exposed busbar 10 may come into contact with a metal adjacent thereto, whereby short circuit may occur.

In addition, fire and venting gas may be transferred to neighboring battery modules via the busbar 10 and the cover member 20, whereby secondary damage, such as fire spread, may occur.

### (Prior Art Document)

(Patent Document 1) Korean Patent Application Publication No. 2015-0101154

### [Disclosure]

### [Technical Problem]

The present invention has been made in view of the above problems, and it is an object of the present invention to provide a busbar assembly capable of inhibiting short circuit due to contact between a busbar and a metal adjacent thereto as the result of a covering member being lost due to fire, thereby preventing damage by fire, and a battery pack including the same.

It is another object of the present invention to provide a busbar assembly capable of preventing secondary damage due to spread of fire to neighboring battery modules and leakage of venting gas as the result of a busbar and a cover member being spaced apart from each other by the pressure generated by the venting gas, thereby preventing damage by fire, and a battery pack including the same.

### [Technical Solution]

A busbar assembly according to the present invention to accomplish the above objects includes a busbar (100) including a copper material and a cover member (200) wrapping a part of the busbar (100), wherein the busbar (100) includes a first busbar (110) and a second busbar, the first busbar protrudes from each of opposite sides of the cover member (200) and the second busbar (120) is wrapped by the cover member (200), and the width (W2) of the second busbar (120) is less than the width (W1) of the first busbar (110).

Also, in the busbar assembly according to the present invention, the height (L2) of the second busbar (120) may be less than the height (L1) of the first busbar (110).

Also, in the busbar assembly according to the present invention, the second busbar (120) may include at least one protrusion provided at an outer surface thereof , wherein the at least one protrusion is spaced apart from the first busbar (110).

Also, in the busbar assembly according to the present invention, the protrusion (121) may have a quadrangular sectional shape.

Also, in the busbar assembly according to the present invention, the protrusion (121) may be provided in a plurality, so as to form an uneven shape.

Also, in the busbar assembly according to the present invention, the protrusion (121) may have a right triangular sectional shape.

Also, in the busbar assembly according to the present invention, an inclined surface of the right triangular shape is formed to face the middle of the second busbar (120).

Also, in the busbar assembly according to the present invention, a metal layer (111) having a predetermined thickness may be formed on each of an upper surface and a lower surface of the first busbar (110).

Also, in the busbar assembly according to the present invention, the metal layer (111) may be formed by copper clad aluminum (CCA) welding.

Also, in the busbar assembly according to the present invention, the cover member (200) may include a refractory material.

Also, in the busbar assembly according to the present invention, the refractory material may include at least one of a ceramized silicone, a resin mixed with a polyethylene and an ethylene copolymer, and mica.

In addition, the present invention provides a battery pack including a busbar assembly having the aforementioned features.

### [Advantageous Effects]

As is apparent from the above description, a busbar assembly according to the present invention has an advantage in that a step is formed between a first busbar and a second busbar, whereby it is possible to prevent fire and venting gas from being introduced between the busbar and a cover member.

In addition, the busbar assembly according to the present invention has an advantage in that a protrusion is formed on the second busbar, whereby it is possible to inhibit the movement of the fire and the venting gas introduced between the busbar and the cover member.

In addition, the busbar assembly according to the present invention has an advantage in that the cover member is not lost by fire, whereby it is possible to block contact between the busbar and a metal adjacent thereto, and therefore it is possible to prevent short circuit.

### [Description of Drawings]

FIG. 1 is a perspective view showing a conventional flexible busbar assembly.
FIG. 2 is a sectional view of a busbar assembly according to a first preferred embodiment of the present invention, cut in a vertical direction and a horizontal direction.
FIG. 3 is a sectional view of a busbar assembly according to a second preferred embodiment of the present invention, cut in the vertical direction and the horizontal direction.
FIG. 4 is a sectional view of a busbar assembly according to a third preferred embodiment of the present invention, cut in the vertical direction and the horizontal direction.
FIG. 5 is a sectional view of a busbar assembly according to a fourth preferred embodiment of the present invention, cut in the vertical direction and the horizontal direction.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a busbar assembly capable of preventing damage by fire according to the present invention and a battery pack including the same will be described in detail with reference to the accompanying drawings.

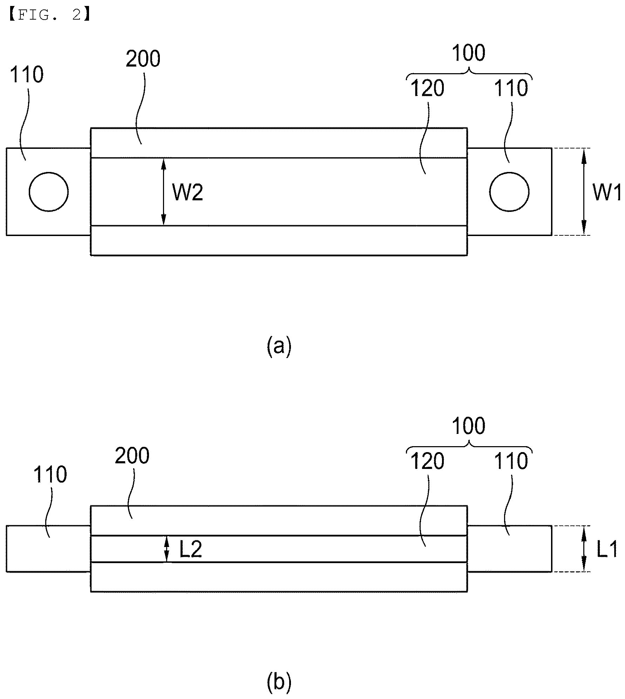

FIG. 2 is a sectional view of a busbar assembly according to a first preferred embodiment of the present invention, cut in a vertical direction and a horizontal direction.

As shown in FIG. 2, the busbar assembly according to the present invention includes a busbar 100 and a cover member 200 configured to wrap a part of the busbar 100.

The busbar 100 may be made of a flat copper material, and may include a first busbar 110 located at each of opposite ends and a second busbar 120 wrapped by the cover member 200, the second busbar being configured to connect the first busbars 110 located at the opposite ends to each other.

The first busbar 110 may be connected to a terminal of a battery module adjacent thereto, and the second busbar 120 connects the first busbars 110 located at opposite sides thereof to each other through a wall configured to partition each battery module zone in a case configured to receive a battery module in a state of being wrapped by the cover member 200.

The width W2 of the second busbar 120 may be less than the width W1 of the first busbar 110, and the height L2 of the second busbar 120 may be less than the height L1 of the first busbar 110, whereby a step may be formed between the first busbar 110 and the second busbar 120.

The second busbar 120 is wrapped by the cover member 200. Even though fire or venting gas occurs in a direction toward the first busbar 110, therefore, it is difficult for the venting gas to be introduced between the second busbar 120 and the cover member due to the step formed between the first busbar 110 and the second busbar 120, whereby safety may be improved.

The cover member 200, which wraps the second busbar 120 to prevent short circuit due to contact between the second busbar 120 and a metal adjacent thereto, may be made of an insulative material.

In addition, the cover member 200 may be made of a refractory material that does not melt in the event of fire or at high temperatures. As an example, the cover member may be made of a material including at least one of ceramized silicone, a ceramic material, a resin mixed with a polyethylene and ethylene copolymer, mica, glass fiber woven fabric, and a mixture of mPPO and GF20.

The movement of the cover member 200 in a longitudinal direction thereof may be restricted by the step formed between the first busbar 110 and the second busbar 120, whereby fixation force may be improved.

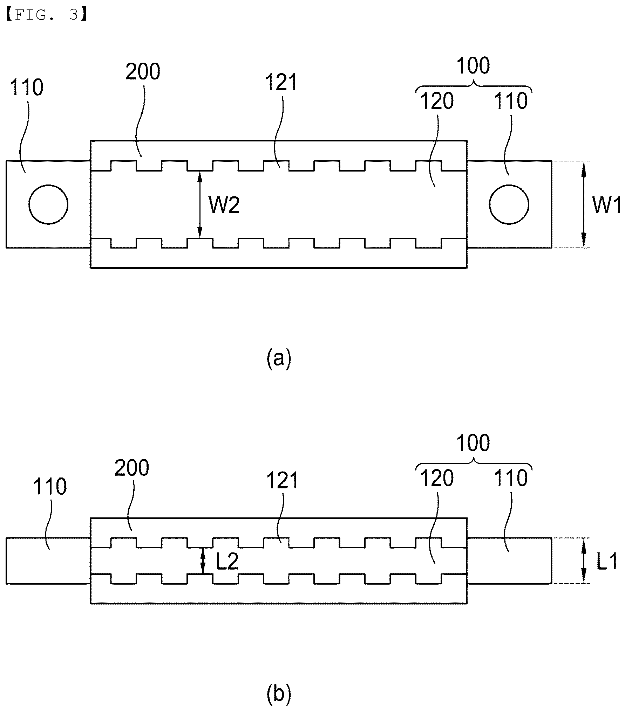

FIG. 3 is a sectional view of a busbar assembly according to a second preferred embodiment of the present invention, cut in the vertical direction and the horizontal direction.

Referring to FIG. 3, the busbar assembly according to the second preferred embodiment of the present invention is identical to the busbar assembly according to the first embodiment described with reference to FIG. 2 except for the shape of a second busbar 120, and therefore a description of the same configuration will be omitted.

In the busbar assembly according to the second embodiment of the present invention, at least one band-shaped protrusion 121 may be formed on an outer surface of the second busbar 120 along the perimeter of the second busbar 120, and the sectional shape of the protrusion 121 may be quadrangular.

A plurality of protrusions 121 may be provided, and the protrusions may be spaced apart from each other by a predetermined distance to form an uneven shape.

When a plurality of protrusions 121 is formed, each protrusion 121 may block venting gas introduced between the second busbar 120 and a cover member 200, whereby the effect of blocking the movement of the venting gas may be improved, compared to when only one protrusion 121 is formed.

At this time, the outermost protrusion 121 may be formed so as to be spaced apart from a first busbar 110. The reason for this is that, if the protrusion 121 is formed so as to be in tight contact with the first busbar 110, no step is formed between the first busbar 110 and the second busbar 120, whereby the effect of inhibiting the inflow of venting gas due to the step may be reduced.

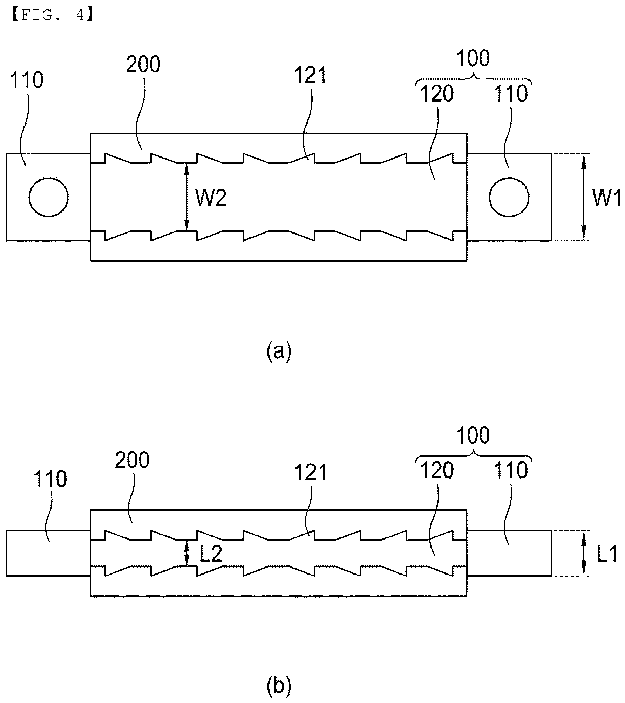

FIG. 4 is a sectional view of a busbar assembly according to a third preferred embodiment of the present invention, cut in the vertical direction and the horizontal direction.

Referring to FIG. 4, the busbar assembly according to the third preferred embodiment of the present invention is identical to the busbar assembly according to the first embodiment described with reference to FIG. 2 except for the shape of a second busbar 120, and therefore a description of the same configuration will be omitted.

In the busbar assembly according to the third embodiment of the present invention, at least one band-shaped protrusion 121 may be formed on an outer surface of the second busbar 120 along the perimeter of the second busbar 120.

The sectional shape of the protrusion 121 may be right triangular, and an inclined surface of the right triangular shape inclined at a predetermined angle may be formed so as to face the middle of the second busbar 120.

A plurality of protrusions 121 may be provided so as to be spaced apart from each other. When a plurality of protrusions 121 is formed, each protrusion 121 may block venting gas introduced between the second busbar 120 and a cover member 200, whereby the effect of blocking the movement of the venting gas may be improved, compared to when only one protrusion 121 is formed.

At this time, the outermost protrusion 121 may be formed so as to be spaced apart from a first busbar 110. The reason for this is that, if the protrusion 121 is formed so as to be in tight contact with the first busbar 110, no step is formed between the first busbar 110 and the second busbar 120, whereby the effect of inhibiting the inflow of venting gas due to the step may be reduced.

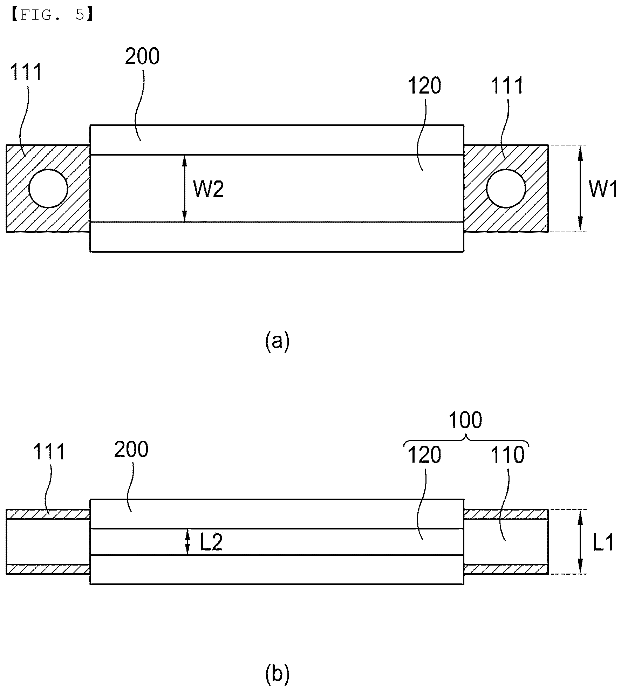

FIG. 5 is a sectional view of a busbar assembly according to a fourth preferred embodiment of the present invention, cut in the vertical direction and the horizontal direction.

Referring to FIG. 5, the busbar assembly according to the fourth preferred embodiment of the present invention is identical to the busbar assembly according to the first embodiment described with reference to FIG. 2 except that a metal layer 111 is formed on a first busbar 110, and therefore a description of the same configuration will be omitted.

In the busbar assembly according to the fourth embodiment of the present invention, a metal layer 111 having a predetermined thickness may be formed on each of an upper surface and a lower surface of a first busbar 110 located at each of opposite ends.

As an example, the metal layer 111 may be made of aluminum, and may be formed by copper clad aluminum (CCA) welding.

As the metal layer 111 is formed on each of the upper and lower surfaces of the first busbar 110, a step may be formed between the first busbar 110 and a second busbar 120, whereby it is possible to prevent venting gas from being introduced between the first busbar 120 and a cover member 200.

Although the height of the first busbar 110 excluding the metal layer 111 is shown as being greater than the height of the second busbar 120 in the figure, the height of the first busbar 110 excluding the metal layer 111 may be equal to the height of the second busbar 120, since the metal layer 111 may be formed on the first busbar 110 to form a step.

In addition, the present invention may provide a battery pack including the busbar assembly and a device having the battery pack mounted therein.

Those skilled in the art to which the present invention pertains will appreciate that various applications and modifications are possible within the category of the present invention based on the above description.

### (Description of Reference Symbols)

- 100:: Busbar
- 110:: First busbar
- 111:: Metal layer
- 120:: Second busbar
- 121:: Protrusion
- 200:: Cover member
- W1:: Width of first busbar
- W2:: Width of second busbar
- L1:: Height of first busbar
- L2:: Height of second busbar

## Claims

1. A busbar assembly comprising:
a busbar including a copper material; and
a cover member wrapping a part of the busbar, wherein
the busbar comprises a first busbar and a second busbar, the first busbar protrudes from each of opposing sides of the cover member and the second busbar is wrapped by the cover member, and
a width of the second busbar is less than a width of the first busbar.

2. The busbar assembly according to claim 1, wherein a height of the second busbar is less than a height of the first busbar.

3. The busbar assembly according to claim 2, wherein the second busbar includes at least one protrusion provided at an outer surface thereof, wherein the at least one protrusion is spaced apart from the first busbar.

4. The busbar assembly according to claim 3, wherein the protrusion has a quadrangular sectional shape.

5. The busbar assembly according to claim 4, wherein the protrusion is provided in a plurality, so as to form an uneven shape.

6. The busbar assembly according to claim 3, wherein the protrusion has a right triangular sectional shape.

7. The busbar assembly according to claim 6, wherein an inclined surface of the right triangular shape is formed to face a middle of the second busbar.

8. The busbar assembly according to claim 2, wherein a metal layer having a predetermined thickness is formed on each of an upper surface and a lower surface of the first busbar.

9. The busbar assembly according to claim 8, wherein the metal layer is formed by copper clad aluminum (CCA) welding.

10. The busbar assembly according to claim 1, wherein the cover member includes a refractory material.

11. The busbar assembly according to claim 10, wherein the refractory material comprises at least one of materials comprising at least one of a ceramized silicone, a ceramic material, a resin mixed with a polyethylene and an ethylene copolymer, mica, a glass fiber woven fabric, or a mixture of mPPO and GF20.

12. A battery pack comprising the busbar assembly according to any one of claims 1 to 11.
